# EUROPÄISCHE PATENTANMELDUNG

(11) **EP 3 357 841 A1**
(43) Veröffentlichungstag der Anmeldung: **08.08.2018**
(21) Anmeldenummer: 17154331.7
(22) Anmeldetag: 02.02.2017
(51) Int. Cl.: B65G 39/02, B65G 13/10

(54) **MODULARE FÖRDEREINHEIT**

(71) Anmelder: Siemens Aktiengesellschaft, 80333 München (DE)
(72) Erfinder: FROEHLICH, Thomas, 78476 Allensbach (DE); SCHNURR, Alexander, 78467 Konstanz (DE)
(74) Vertreter: Maier, Daniel Oliver

(57) **Zusammenfassung**

Die Erfindung offenbart eine Fördereinheit (2) für ein übergeordnetes Fördersystem (28) zum Transport von Gütern (4) auf einer Transportebene (6). Die Fördereinheit (2) umfasst Transportrollen (8), Antriebsmittel (18), mindestens eine Verstellvorrichtung (16) und eine Steuereinheit (20). Die Transportrollen (8) sind mit ansteuerbarer Drehzahl und ansteuerbarer Drehrichtung um ihre jeweiligen Drehachsen (10) rotierbar. Die Antriebsmittel (18) sind zum Antreiben der Transportrollen (8) ansteuerbar ausgestaltet. Die Drehachsen (10) der Transportrollen (8) sind um ihre jeweiligen Schwenkachsen (12) um einen eigenen Schwenkachsenwinkel (14) ansteuerbar durch Rotation verstellbar ausgestaltet. Die Verstellvorrichtung (16) ist zum Verstellen der Drehachsen (10) der Transportrollen (8) um ihre jeweiligen Schwenkachsen (12) ansteuerbar ausgestaltet. Die Steuereinheit (20) ist zum Ansteuern der Fördereinheit (2), insbesondere der Verstellvorrichtung (16) und der Antriebsmittel (18), ausgestaltet und die Fördereinheit (2) umfasst zudem eine Verbindungsvorrichtung (32) zum Verbinden der Fördereinheit (2) mit dem übergeordneten Fördersystem (28).

## Beschreibung

Die vorliegende Erfindung betrifft das technische Gebiet der Fördersysteme für Güter.

Fördereinheiten für Fördersysteme, insbesondere solche, die mittels einstellbarer Transportrollen das gerichtete Fördern erlauben, werden durch konventionelle Konstruktionen diskret auf die Dimension des jeweiligen Fördersystems ausgelegt. Die Transportrollen können meist nur diskret zwischen zwei oder drei Positionen hin- und hergeschwenkt werden, wie es für eine Weiche für Fördersysteme üblich ist. Der Antrieb erfolgt meist über Riemen getrieben über ein fest installiertes Antriebselement, welches sich unter der eigentlichen Transportrolle befindet. Die Antriebselemente sind oftmals unidirektional ausgeführt.

Durch die diskrete Auslegung der Fördereinheit auf die Dimension des jeweiligen Fördersystems eignet sich die Fördereinheit nur für das betreffende Fördersystem, wobei Wartung, Einbau und Ausbau Fachkenntnisse erfordert und mit erheblichem Aufwand verbunden ist. Die Auslegung einer übergeordneten Steuereinheit ist ebenfalls nicht trivial, da jede verbaute Transportrolle für die Programmierung der Steuereinheit einzeln berücksichtigt werden muss. Die Transportrollen gängiger Fördereinheiten können zudem nicht kontinuierlich geschwenkt werden und die unterhalb der Transportrolle befindlichen Antriebselemente erlauben keine einfache Änderung der Transportrichtung.

Der vorliegenden Erfindung liegt daher die Aufgabe zugrunde, eine verbesserte und einfach einbaubare Fördereinheit bereitzustellen. Diese Aufgabe wird durch die in dem unabhängigen Anspruch beschriebene Lösung gelöst.

Die erfindungsgemäße Lösung sieht eine Fördereinheit für ein übergeordnetes Fördersystem zum Transport von Gütern auf einer Transportebene vor. Die Fördereinheit umfasst Transportrollen, Antriebsmittel, mindestens eine Verstellvorrichtung und eine Steuereinheit. Die Transportrollen sind mit ansteuerbarer Drehzahl und ansteuerbarer Drehrichtung um ihre jeweiligen Drehachsen rotierbar. Die Antriebsmittel sind zum Antreiben der Transportrollen ansteuerbar ausgestaltet. Die Drehachsen der Transportrollen sind um ihre jeweiligen Schwenkachsen um einen eigenen Schwenkachsenwinkel ansteuerbar durch Rotation verstellbar ausgestaltet. Die Verstellvorrichtung ist zum Verstellen der Drehachsen der Transportrollen um ihre jeweiligen Schwenkachsen ansteuerbar ausgestaltet. Die Steuereinheit ist zum Ansteuern der Fördereinheit, insbesondere der Verstellvorrichtung und der Antriebsmittel, ausgestaltet und die Fördereinheit umfasst zudem eine Verbindungsvorrichtung zum Verbinden der Fördereinheit mit dem übergeordneten Fördersystem.

Die erfindungsgemäße Fördereinheit eignet sich je nach Ausgestaltung für unterschiedliche Arten von Gütern, beispielsweise Pakete und Postsendungen, Koffer und Gepäckstücke, Kisten, Gebinde und kommissionierbare Stückgüter. Unter Transportieren soll im weiteren Sinne auch eine Ausrichtungsveränderung des Gutes ohne Schwerpunktsveränderung verstanden werden.

Um das Gut mit vielen Freiheitsgraden zu transportieren, können mindestens zwei der Transportrollen voneinander abweichend ansteuerbar sein.

Unter einer voneinander abweichenden Ansteuerbarkeit soll hierbei eine individuelle Ansteuerbarkeit von einzelnen Transportrollen oder von Transportrollengruppen verstanden werden bezüglich der Parameter Drehzahl, Drehrichtung und Schwenkachsenwinkel, wobei die individuelle Einstellbarkeit alle, zwei oder nur einen der Parameter umfassen kann. Die Ansteuerbarkeit der Drehzahl umfasst sowohl Drehgeschwindigkeit, als auch Drehrichtung. Die prinzipiell mögliche individuelle Ansteuerbarkeit umfasst auch eine gleiche Ansteuerung einzelner oder aller dieser Parameter.

Gemäß einer Ausführungsform können die Antriebsmittel individuell ansteuerbar zum Antreiben einer Transportrolle ausgestaltet sein. So können die Transportrollen unkompliziert mit voneinander abweichender Drehzahl und Drehrichtung angesteuert werden, wodurch so auch bei übereinstimmender Einstellung der Schwenkachsenwinkel das Gut in einstellbare Transportrichtungen transportiert und gleichzeitig in seiner Ausrichtung manipuliert werden kann. Die Transportrollen einer Fördereinheit können also in positiver Drehrichtung und/ oder negativer Drehrichtung mit gleicher und/ oder unterschiedlicher Drehgeschwindigkeit antreibbar sein. So kann ein Gut unkompliziert auf der Stelle rotiert und auch weitere geschickte Manipulationen eines Güterstroms werden ermöglicht.

Um eine robuste und genaue Lage-, Geschwindigkeits- und Momentenregelung der Transportrolle mit einfacher Ansteuerung zu erzielen, kann das Antriebsmittel als Servoantrieb ausgestaltet sein.

Gemäß einer weiteren Ausführungsform kann die Verbindungsvorrichtung zur Stromversorgung der Fördereinheit ausgestaltet sein. Da so zur Stromversorgung kein zusätzlicher Anschluss notwendig ist, ist der Einbau der Fördereinheit besonders einfach.

Um einen besonders unkomplizierten Ein- und Ausbau der Fördereinheit zu ermöglichen, kann die Verbindungsvorrichtung als Steckverbindung ausgestaltet sein.

Gemäß einer weiteren Ausführungsform kann die Verbindungsvorrichtung zur Signalübertragung ausgestaltet sein. So können besonders zuverlässig und störungsarm Signale zwischen dem übergeordneten Fördersystem und der Fördereinheit übermittelt werden, allenfalls noch zusätzlich zu weiteren Funktionalitäten.

Um auf unkomplizierte Weise ein mit weiteren T Fördereinheiten und/ oder mit dem übergeordneten Fördersystem koordiniertes Ansteuern zu ermöglichen, kann die Steuereinheit adaptiert sein, von einer übergeordneten Steuereinrichtung angesteuert zu werden.

Gemäß einer weiteren Ausführungsform kann die Verstellvorrichtung zum gemeinsamen Verstellen der Drehachsen der Transportrollen um ihre jeweiligen Schwenkachsen ausgestaltet sein. Die Transportrollen einer Fördereinheit sind so hinsichtlich der Einstellbarkeit ihrer Schwenkachsenwinkel gekoppelt, wobei gleiche und/ oder verschiedene Schwenkachsenwinkel gemeinsam einstellbar sind. Die Ansteuerung der Fördereinheit ist so aufgrund geringerer Freiheitsgrade der Verstellung weniger kompliziert.

Um eine Feineinstellung der Transportrichtungen der Transportrollen zu erreichen, kann die Verstellvorrichtung zum kontinuierlichen Verstellen der Drehachsen der Transportrollen um ihre jeweiligen Schwenkachsen ausgestaltet sein.

Gemäß einer weiteren Ausführungsform können die Transportrollen in einem für einen Kontakt mit den Gütern vorgesehenen Bereich eine ballige Oberfläche aufweisen, die Drehachsen im Wesentlichen parallel zur Transportebene und die Schwenkachsen im Wesentlich orthogonal zur Transportebene angeordnet sein. Solche Transportrollen bieten eine große Kontaktfläche zwischen Transportrollenoberfläche und Gut, wodurch eine besonders effiziente und präzise Kraftübertragung und somit ein besonders zuverlässiges Transportieren ermöglicht wird.

Um die bewegten Teile und Lager der Fördereinheit vor Verschmutzung zu schützen und um eine möglichst glatte Oberfläche mit wenig Störkonturen zu konstruieren, kann die Fördereinheit zudem eine Abdeckvorrichtung umfassen, welche Aussparungen für die Transportrollen aufweist. Die Abdeckvorrichtung dient somit dem Schutz von sowohl den Gütern, als auch der Fördereinheit selber und verhindert zudem noch das Einklemmen der Gliedmaßen eines Bedieners.

Um eine besonders hohe Stabilität der Abdeckvorrichtung zu erreichen, kann die Abdeckvorrichtung als geschlossenes Profil ausgestaltet sein. Zumindest im Querschnitt geschlossene Profile können hohen Kräften Stand halten. Rohrartige Profile mit rundem oder eckigem Querschnitt, aber auch Sigma-Profile sind typische Ausführungsform eines geschlossenen Profils.

Um ausgedehnte Förderbereiche bereitzustellen und zu nutzen, können zwei oder mehr Fördereinheiten in beliebiger Anordnung zueinander anordenbar sein. Durch die Modularität der Fördereinheiten können so unkompliziert und rasch maßgeschneiderte und dennoch einfach kontrollier- und aufbaubare Fördereinheit konstruiert werden.

Gemäß einer Ausführungsform können die die Steuereinheiten von zwei oder mehr Fördereinheiten adaptiert sein, koordiniert angesteuert zu werden. So kann ein Gut gleichzeitig von mehr als einer Fördereinheit transportiert und manipuliert werden.

Ausführungsformen der Erfindung werden nachfolgend anhand der Figuren beispielsweise näher erläutert. Dabei zeigen:
- Figur 1: schematisch eine erfindungsgemäße Fördereinheit;
- Figur 2: eine Fördereinheit mit gemeinsamer Verstellvorrichtung;
- Figur 3: eine weitere Fördereinheit mit gemeinsamer Verstellvorrichtung und Abdeckvorrichtung; und
- Figur 4: ein Fördersystem mit hintereinander und nebeneinander angeordnete Fördereinheiten.

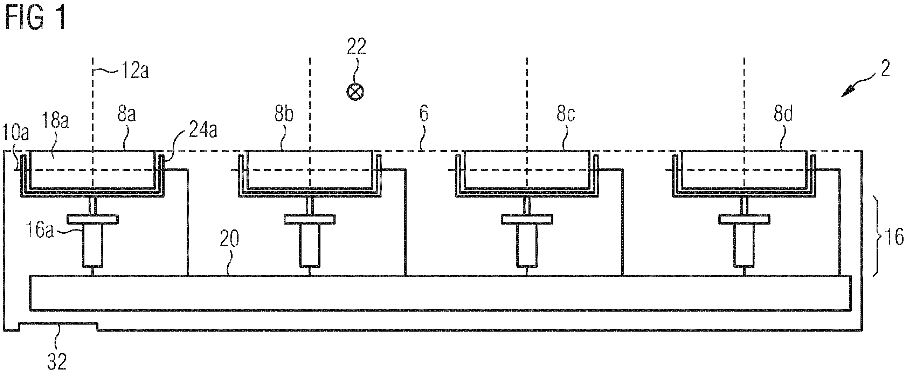

Figur 1 zeigt gemäß einer Ausführungsform der Erfindung schematisch und im Querschnitt dargestellt eine Fördereinheit 2 umfasst im Wesentlichen gleichartig ausgestaltete Transportrollen 8a - 8d zum Transport von Gütern 4 wie Paketen oder Gepäckstücken entlang einer Transportebene 6, wobei die Haupttransportrichtung 22 in die Bildebene hinein zeigt und die Transportrollen 8a - 8d die Transportebene 6 aufspannen. Die Transportrollen 8a - 8d weisen jeweils eigene Drehachsen 10a - 10d, eigene ansteuerbare Antriebsmitteln 18a - 18d, eigene Schwenkachsen 12a - 12d und eigene Transportrollenlagerungen 24a - 24d auf. Ein hier nicht dargestelltes Gut 4 wird in Abhängigkeit von seinen Ausmaßen und seiner Ausrichtung auf mindestens einer oder mehreren der Transportrollen 8a - 8d aufliegend entlang der Transportebene 6 transportiert und/ oder in seiner Ausrichtung verändert werden.

Die Transportrollen 8a - 8d sind mit Hilfe der Antriebsmittel 18a - 18d um ihre jeweiligen Drehachsen 10a - 10d mit einstellbarer, die Transportgeschwindigkeit bestimmender Drehzahl rotierbar, wobei die Drehzahlen in Betrag und/ oder Vorzeichen miteinander übereinstimmen und/ oder ganz oder gruppenweise voneinander abweichen können. Die Drehzahl umfasst somit auch die Drehrichtung. Die Transportrollen 8a - 8d der Fördereinheit 2 sind somit in positiver und/ oder negativer Drehrichtung antreibbar. Die Antriebsmittel 8a - 8d sind als Direktantriebe ausgestaltet, die in allen vier durch Drehmoment und Drehzahl (Drehgeschwindigkeit und positive und negative Drehrichtung) aufgespannten Quadranten regelbar sind und somit aktives Beschleunigen und aktives Abbremsen, sowie Rechts- und Linkslauf ermöglichen. Für ein genaues individuelles Einstellen und Ansteuern eigenen sich integrierte Servoantriebe besonders gut, aber auch anders ausgestaltete Antriebsmittel 18a - 18d sind möglich.

Jede Transportrolle 8a weist eine eigene Transportrichtung 34a auf, die durch Einstellung von Drehrichtung und Schwenkachsenwinkel 14a ansteuerbar regelbar ist. Ein Schwenkachsenwinkel 14a von 0° wird hier definiert über eine mit der Haupttransportrichtung 22 übereinstimmende Transportrichtung 34a bei positiver Drehrichtung. Bei einer zylinderartig ausgestalteten Transportrolle 8a, die in einem für den Kontakt für den Gütern 4 vorgesehenen Bereich eine umlaufende, zylindermantelartige Oberfläche aufweist, ist die Schwenkachse 12a vorteilhafterweise orthogonal zur Transportebene 6 angeordnet und die Drehachse 10a bleibt somit stets parallel zur und unterhalb der Transportebene 6.

Sehr vorteilhaft wäre bei einer Schwenkachsenanordnung orthogonal zur Transportebene 6 auch eine ballige oder bombierte ausgestaltete Transportrolle 8, da eine ballige Ausgestaltung im Vergleich zu einer zylindermantelartigen Ausgestaltung eine Verstellung des Schwenkachsenwinkels 14a erleichtert und weniger Störkonturen zwischen Transportrolle 8a und Gut 4 aufweist. Eine ganz oder zumindest teilweise kugeloberflächenartige Oberfläche stellt einen Spezialfall einer balligen Oberfläche dar.

Die Fördereinheit 2 umfasst eine zum optimierten Ansteuern der Fördereinheit 2 ausgestaltet Steuereinheit 20, mit der die Antriebsmittel 18a - 18d und die Verstellvorrichtungen 16a - 16d angesteuert werden. Die Fördereinheit 2 umfasst eine Verbindungsvorrichtung 32, so dass diese einfach mit dem übergeordneten Fördersystem 28 verbindbar ist.

Der Schwenkachsenwinkel 14a wird mit einer ansteuerbaren Verstellvorrichtung 16a eingestellt, indem die Transportrolle 8a samt Drehachse 10a um ihre Schwenkachse 12a gedreht wird. Die Fördereinheit 2 kann eine einzige Verstellvorrichtung 16 für alle Transportrollen 8a - 8d umfassen, oder jede Transportrolle 8a - 8d wird mit einer eigenen Verstellvorrichtung 16a - 16d eingestellt wie in Figur 1 gezeigt. Die Verstellvorrichtungen 16a - 16d sind individuell einstellbar und individuell von der Steuereinheit 20 ansteuerbar ausgestaltet.

Die Transportrollen 8a - 8d haben also vier ansteuerbar einstellbare Freiheitsgrade - Drehzahl, Drehrichtung und Schwenkachsenwinkel sowie Drehmoment - die individuell einstellbar und in Anwesenheit oder Abwesenheit eines Stückguts 4 verstellbar sind. Eine individuelle Einstellbarkeit umfasst hierbei auch, dass die Einstellung von zwei oder mehr der aufgeführten Freiheitsgrade von zwei oder mehr der Transportrollen 8a - 8d übereinstimmt und/ oder gemeinsam verstellbar ist. Die Transportrollen 8a - 8d sind also mit gleicher und/ oder unterschiedlicher Drehgeschwindigkeit, mit übereinstimmender und/ oder voneinander abweichender Drehrichtung und mit übereinstimmendem und/ oder voneinander abweichenden Drehmoment um ihre Drehachsen 10a - 10d einstellbar rotierbar. Die Schwenkachsenwinkel 14a - 14d von zwei oder mehr Transportrollen 8a - 8d sind übereinstimmend und/ oder voneinander abweichend einstellbar.

Die Fördereinheit 2 stellt eine optimierte Anordnung von Transportrollen 8 mit integrierten Antriebsmitteln 18a - 18d und kompakten Verstellvorrichtungen 16a - 16d zum kontinuierlichen Ansteuern der Transportrollen 8a - 8d mit einer Steuereinheit 20 dar. Die Modularität in der Anordnung der Fördereinheit 2 ermöglicht eine rasche und unkomplizierte Konfiguration einer Fördereinheit 2 eines übergeordneten Fördersystems 28.

Die Verbindungsvorrichtung 32 ist zur Stromversorgung und/ oder zu Signalübertragung ausgestaltet, und kann so einfach einer übergeordneten Steuereinrichtung 21 des übergeordneten Fördersystems 28 angesteuert werden. Die übergeordnete Steuereinrichtung 21 steuert die Steuereinheit 20 der Fördereinheit 20 in Abhängigkeit von Position und Ausrichtung der Stückgüter 4 auf der Transportebene 6 an.

Die Fördereinheit 2 ist so ansteuerbar, dass die Transportrollen 8a - 8d übereinstimmende Drehzahl, übereinstimmende Drehrichtung, sowie übereinstimmenden Schwenkachsenwinkel 14a - 14d aufweisen können. Für ein vielfältiges Manipulieren von Gütern ist die Fördereinheit 2 darüber hinaus so ansteuerbar, dass mindestens zwei Transportrollen 8 voneinander abweichend ansteuerbar sind. Es können somit einige oder alle Transportrollen individuelle Einstellungen aller oder einzelner Parameter aufweisen, aber es ist auch möglich, dass die Transportrollen 8a - 8d gruppenweise übereinstimmend eingestellt sind. Eine abweichende Einstellung der Transportrollen muss nur einen der Freiheitsgrade betreffen. So ist beispielsweise eine voneinander abweichend eingestellte Drehrichtung und/ oder Drehgeschwindigkeit mit übereinstimmender Einstellung der Schwenkachsenwinkel 14 insgesamt eine voneinander abweichende Einstellung der Transportrollen 8.

Um ein gleichermaßen auf allen vier Transportrollen aufliegendes Gut 4 bei parallel eingestellten Drehachsen und übereinstimmenden Schwenkachsenwinkeln 14 auf der Stelle zu rotieren, können die beiden rechten Transportrollen 8c, 8d mit positivem Drehsinn und die beiden linken Transportrollen 8a, 8b mit negativem Drehsinn aber übereinstimmendem Drehzahlbetrag angetrieben werden - oder jeweils umgekehrt. Anstatt die Transportrollen 8a - 8d mit entgegengesetztem Drehsinn anzutreiben, könnten alternativ auch die Schwenkachsenwinkel 14a - 14d eingestellt werden. Die Schwenkachsenwinkel 14a - 14d sind kontinuierlich einstellbar.

Mindestens zwei voneinander abweichend einstellbare Transportrollen 8 sind erforderlich, um ein Gut 4 zu rotieren. Mit mehr Transportrollen 8 wird die Führung des Gutes 4 verbessert.

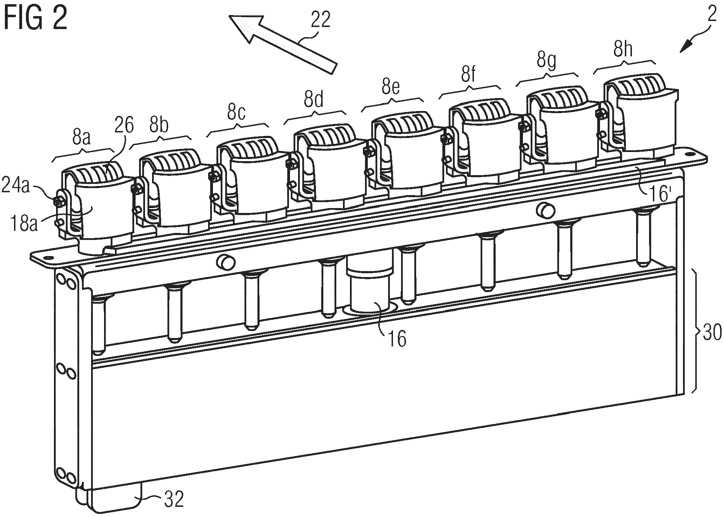

Figur 2 zeigt gemäß einer weiteren Ausführungsform der Erfindung eine modulare Fördereinheit 2 umfassend geordnet entlang einer Linie angeordneten Transportrollen 8a - 8h und eine gemeinsame Verstellvorrichtung 16 für alle Transportrollen 8a - 8h. Die Verstellvorrichtung 16 ist über eine Verstellvorrichtungsachse 16' mit den Transportrollen 8a - 8h mechanisch gekoppelt, so dass die Drehachsen 10a - 10h aller Transportrollen 8a - 8h gleichzeitig und gemeinsam um den gleichen Schwenkachsenwinkel 14a - 14d verstellt werden können. Somit weisen die Transportrollen 8a - 8h stets übereinstimmende Schwenkachsenwinkel 14 auf und die Drehachsen 10a - 10d bleiben stets parallel zueinander. Die Verstellvorrichtung 16 ist für eine stufenlose Einstellung der Schwenkachsenwinkel 14a - 14d ausgestaltet, die somit wahlfreie Winkelwerte zwischen 0° und 360° annehmen können. Die stufenlose Einstellung beliebiger Winkelwerte erlaubt ein sehr genaues Einstellen der Transportrichtung 34a - 34d der Transportrollen 8a - 8d. Die Fördereinheit 2 umfasst in ihrem Inneren eine kompakt verbaute Elektronikeinheit 30, wobei diese in kompakter Ausgestaltung neben der Steuereinheit 20 weitere, der elektronischen Steuerung und der Spannungsversorgung dienende Komponenten umfasst.

Die Antriebsmittel 18a - 18h sind als separat ansteuerbare Außenmotoren ausgestaltet, die gleichzeitig als Klemmschutz für zusätzliche Sicherheit agieren. Antriebsmittel 18a, Transportrolle 8a und Transportrollenlagerung 24a stellen ein integriertes Bauteil dar. Die Transportrollen 8a - 8h weisen teilweise einen umlaufenden Reibbelag 26 für eine verbesserte Haftwirkung zwischen Transportrolle 8 und Gut 4 auf, so dass die Übertragung der Bewegung der Transportrolle 8 auf das Gut optimiert ist. Der Reibbelag ist dauerfest ausgestaltet und somit besonders wartungsarm.

Um ein Gut 4 zu rotieren, können die Antriebsmittel 18e - 18h der rechts außen positionierten Transportrollen 8e - 8h mit positiver Drehzahl und somit positiver Drehrichtung, die Antriebsmittel 18a - 18d der links außen positionierten Transportrollen 8a - 8d mit negativer Drehzahl und somit negativer Drehrichtung angesteuert angetrieben werden. Durch eine Ansteuerung der Antriebsmittel 18a - 18h mit unterschiedlichen Drehzahlen, sowie übereinstimmender und/ oder voneinander abweichenden Drehrichtungen kann das Gut 4 auch bei übereinstimmenden Schwenkachsenwinkeln 14a - 14h mit hoher Variabilität transportiert und während des Transports oder beim Stillstehen in seiner Ausrichtung manipuliert werden.

Die Verbindungsvorrichtung 32 ist als Steckverbindung ausgestaltet, so dass ein Einbau der Fördereinheit 2, insbesondere das Verbinden mit einer übergeordneten Steuerung 21 des übergeordneten Fördersystems 28 besonders unkompliziert ist. Beim Einstecken erfolgt eine automatische Kontaktierung zwischen Fördereinheit 2 und übergeordnetem Fördersystem 28.

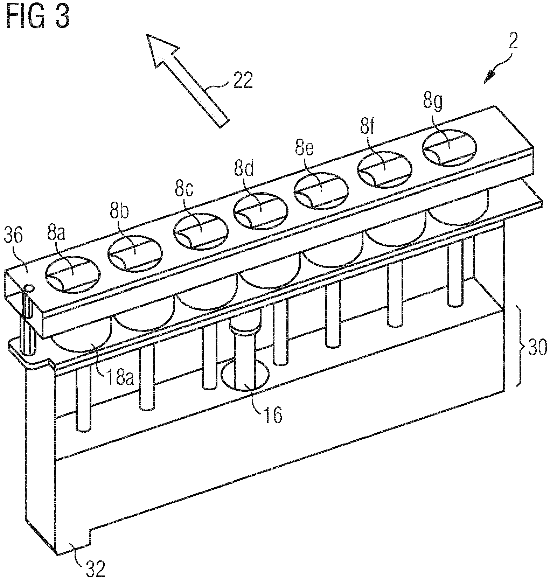

Figur 3 zeigt eine weitere Fördereinheit 2 mit individuell ansteuerbaren Antriebsmitteln 18a - 18g zum Antreiben der Transportrollen 8a - 8g gemäß noch einer weiteren Ausführungsform der Erfindung. Die Fördereinheit 2 ist ähnlich wie die in Figur 2 dargestellte ausgestaltet mit einer gemeinsamen Verstellvorrichtung 16 für alle Transportrollen 8a - 8g. Die Verstellvorrichtung 16 ist zum kontinuierlichen Verstellen der Drehachsen 10a - 10g der Transportrollen 8a - 8d um ihre jeweiligen Schwenkachsen 12a - 12g ausgestaltet. Die Schwenkachsenwinkel 14a - 14g können also beliebige Werte annehmen, wobei auch eine Einschränkung des Winkelbereichs möglich ist. Durch Regelung von Drehrichtung und Schwenkachsenwinkel 14a im Bereich von +-90° kann dennoch jede mögliche Transportrichtung 34a der Transportrolle 8a erzielt werden. Die Einschränkung des Schwenkachsenwinkels 14a vereinfacht eine konstruktive Realisierung der Fördereinheit 2, insbesondere die rotativ bewegliche Befestigung der Transportrollenlagerung 24. Bei hauptsächlicher Verwendung der Fördereinheit 2 zum Fördern entlang der Haupttransportrichtung 22 kann auch eine Einschränkung der Schwenkachsenwinkel im Bereich von +- 45° sinnvoll sein.

Die Fördereinheit 2 umfasst eine Abdeckvorrichtung 36, welche Aussparungen für die Transportrollen 8a - 8g aufweist. Die Abdeckvorrichtung 36 dient einerseits als Klemmschutz für Güter 4 und Bedienpersonal, andererseits aber auch als Schutz vor Verschmutzung der bewegten Teile und Lager der Fördereinheit 2. Die Abdeckvorrichtung 36 ist in ihren Maßen an die Ausmaße der modularen Fördereinheit 2 derart angepasst, dass zwei direkt nebeneinander positionierte Fördereinheiten 2 bündig abschließen. Die hier gezeigte Abdeckvorrichtung 36 ist als dreidimensionaler, länglicher und eckiger Hohlkörper und somit als geschlossenes Profil ausgestaltet. Geschlossene Profile und weitere Hohlkörperformen der Abdeckvorrichtung 36 verleihen der Fördereinheit 2 in seiner Anordnung eine besonders hohe Stabilität und schützen zudem die Komponenten auch seitlich und von unten. Vorteilhaft für eine hohe Stabilität ist die Ausgestaltung als geschlossenes Profil, vielfältige Konturen des Profils sind möglich, beispielsweise runde oder eckige Rohrformen, einfach oder mehrfach gefaltete Sigma-Profile. Aber auch andere Ausgestaltungen der Abdeckvorrichtung 36 wie einfache Abdeckbleche, welche Aussparungen für die Transportrollen 8a - 8g aufweisen, sind möglich. Die Aussparungen werden unkompliziert aus einem Rohling der Abdeckvorrichtung durch herausstanzen, heraussägen oder herausschneiden mittels mit Laser- oder Wasserstrahl oder einfach mit einem mechanischen Schneidwerkzeug.

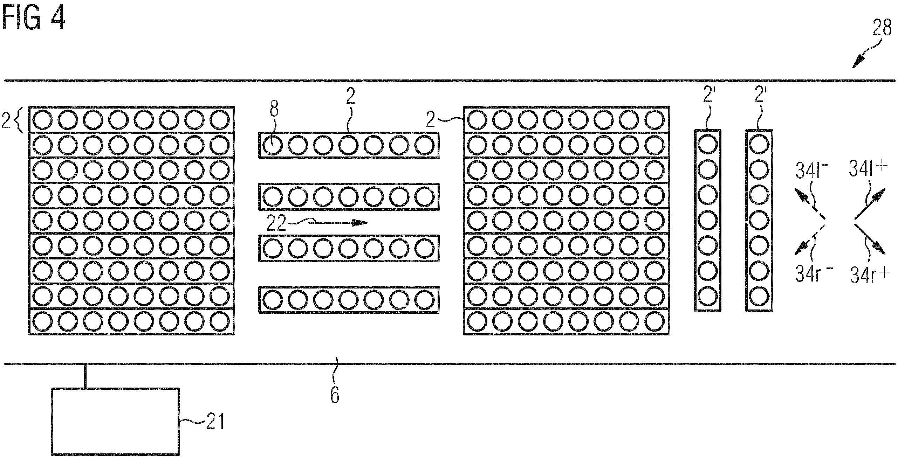

Figur 4 zeigt gemäß einer Ausführungsform der Erfindung ein Fördersystem 28 mit regelmäßig hintereinander und nebeneinander angeordneten Fördereinheiten 2, 2', die entlang der Haupttransportrichtung 22 und im rechten Winkel hierzu angeordnet sind. Die Anordnung der individuell einstellbaren und ansteuerbaren Fördereinheiten 2 ist teilweise rollenteppichartig, teilweise streifenartig. Die rollenteppichartigen Bereiche sind besonders geeignet für das Verändern der Ausrichtung von Gütern, die anderen Bereiche sind insbesondere geeignet für das einfache Transportieren entlang der Haupttransportrichtung 22.

Die Schwenkachsenwinkel 14 einer entlang der Haupttransportrichtung 22 ausgerichteten Fördereinheit 2 können kontinuierliche Werte zwischen +45° und -45° annehmen. Die bei positiver Drehzahl und somit positiver Drehrichtung möglichen Transportrichtungen 34⁺ liegen zwischen 341⁺ und 34r⁺, die bei negativer Drehzahl und somit negativer Drehrichtung möglichen Transportrichtungen 34⁻ zwischen 34l⁻ und 34r⁻. Da die möglichen Transportrichtungen 34⁺, 34⁻ der quer zur Haupttransportrichtung angeordneten Fördereinheiten 2' um 90° gegenüber den eingezeichneten Transportrichtungen 34⁺, 34⁻ rotiert sind, sind sie insbesondere für eine Lenkung der Güter 2 nach rechts bzw. links geeignet. Die Transportgeschwindigkeit der Fördereinheiten 2, 2' wird durch die Drehgeschwindigkeit ihrer Transportrollen 8 bestimmt.

Die Fördereinheiten 2 können nicht nur entlang oder orthogonal zur Haupttransportrichtung 22 angeordnet werden, sondern auch in beliebiger Anordnung zueinander und in einem beliebigen Winkel zur Haupttransportrichtung 22. Die übergeordnete Steuereinrichtung 21 des Fördersystems 28 steuert die Steuereinheiten 20 der einzelnen Fördereinheiten 2, 2' koordiniert an, wobei die Ansteuerung unter Berücksichtigung der von Detektoren erfassten Position und Ausrichtung von Gütern 4 automatisiert erfolgen kann. Die übergeordnete Steuereinrichtung 21 koordiniert die Ansteuerung der einzelnen, zur Ansteuerung durch eine übergeordnete Steuereinrichtung 21 ausgelegten Steuereinheiten 20, so dass der Gütertransport entlang des gesamten Fördersystems 28 optimiert durchgeführt wird.

Gemäß einer weiteren Ausführungsform sind die Transportrollen 8 einer Fördereinheit 2 nichtlinear, beispielsweise kreisförmig, angeordnet und eignen sich so noch besser zum Rotieren eines Guts 4.

Gemäß einer weiteren Ausführungsform ist die Fördereinheit 2 ausgestaltet, über ein Kommunikationsprotokoll, beispielsweise CAN oder CANopen, angesteuert zu werden.

### Bezugszeichenliste

- 2: Fördereinheit
- 4: Gut
- 6: Transportebene
- 8: Transportrolle
- 10: Drehachse
- 12: Schwenkachse
- 14: Schwenkachsenwinkel
- 16: Verstellvorrichtung
- 16': Verstellvorrichtungsachse
- 18: Antriebsmittel
- 20: Steuereinheit
- 21: übergeordnete Steuereinrichtung
- 22: Haupttransportrichtung
- 24: Transportrollenlagerung
- 26: Reibbelag
- 28: Fördersystem
- 30: Elektronikeinheit
- 32: Verbindungsvorrichtung
- 34: Transportrichtung
- 36: Abdeckvorrichtung

## Patentansprüche

1. Fördereinheit (2) für ein übergeordnetes Fördersystem (28) zum Transport von Gütern (4) auf einer Transportebene (6), wobei
a) die Fördereinheit (2) Transportrollen (8), Antriebsmittel (18), mindestens eine Verstellvorrichtung (16) und eine Steuereinheit (20) umfasst;
b) die Transportrollen (8) mit ansteuerbarer Drehzahl und ansteuerbarer Drehrichtung um ihre jeweiligen Drehachsen (10) rotierbar sind;
c) die Antriebsmittel (18) zum Antreiben der Transportrollen (8) ansteuerbar ausgestaltet sind;
d) die Drehachsen (10) der Transportrollen (8) um ihre jeweiligen Schwenkachsen (12) um einen eigenen Schwenkachsenwinkel (14) ansteuerbar durch Rotation verstellbar ausgestaltet sind;
e) die Verstellvorrichtung (16) zum Verstellen der Drehachsen (10) der Transportrollen (8) um ihre jeweiligen Schwenkachsen (12) ansteuerbar ausgestaltet ist;
f) die Steuereinheit (20) zum Ansteuern der Fördereinheit (2), insbesondere der Verstellvorrichtung (16) und der Antriebsmittel (18), ausgestaltet ist; und
g) die Fördereinheit (2) zudem eine Verbindungsvorrichtung (32) zum Verbinden der Fördereinheit (2) mit dem übergeordneten Fördersystem (28) umfasst.

2. Fördereinheit (2) nach Anspruch 1, **dadurch gekennzeichnet, dass**
mindestens zwei der Transportrollen (8) voneinander abweichend ansteuerbar sind.

3. Fördereinheit (2) nach einem der Ansprüche 1 bis 2, **dadurch gekennzeichnet, dass**
die Antriebsmittel (18) individuell ansteuerbar zum Antreiben einer Transportrolle (8) ausgestaltet sind.

4. Fördereinheit (2) nach Anspruch 3, **dadurch gekennzeichnet, dass**
das Antriebsmittel (18) als Servoantrieb ausgestaltet ist.

5. Fördereinheit (2) nach einem der Ansprüche 1 bis 4, **dadurch gekennzeichnet, dass**
die Verbindungsvorrichtung (32) zur Stromversorgung der Fördereinheit (2) ausgestaltet ist.

6. Fördereinheit (2) nach einem der Ansprüche 1 bis 5, **dadurch gekennzeichnet, dass**
die Verbindungsvorrichtung (32) als Steckverbindung ausgestaltet ist.

7. Fördereinheit (2) nach einem der Ansprüche 1 bis 6, **dadurch gekennzeichnet, dass**
die Verbindungsvorrichtung (32) zur Signalübertragung ausgestaltet ist.

8. Fördereinheit (2) nach einem der Ansprüche 1 bis 7, **dadurch gekennzeichnet, dass**
die Steuereinheit (20) adaptiert ist, von einer übergeordneten Steuereinrichtung (21) angesteuert zu werden.

9. Fördereinheit (2) nach einem der Ansprüche 1 bis 8, **dadurch gekennzeichnet, dass**
die Verstellvorrichtung (16) zum gemeinsamen Verstellen der Drehachsen (10) der Transportrollen (8) um ihre jeweiligen Schwenkachsen (12) ausgestaltet ist.

10. Fördereinheit (2) nach einem der Ansprüche 1 bis 9, **dadurch gekennzeichnet, dass**
die Verstellvorrichtung (16) zum kontinuierlichen Verstellen der Drehachsen (10) der Transportrollen (8) um ihre jeweiligen Schwenkachsen (12) ausgestaltet ist.

11. Fördereinheit (2) nach einem der Ansprüche 1 bis 10, **dadurch gekennzeichnet, dass**
die Transportrollen (8) in einem für einen Kontakt mit den Gütern (4) vorgesehenen Bereich eine ballige Oberfläche aufweisen, die Drehachsen (10) im Wesentlichen parallel zur Transportebene (6) und die Schwenkachsen (12) im Wesentlich orthogonal zur Transportebene (6) angeordnet sind.

12. Fördereinheit (2) nach einem der Ansprüche 1 bis 11, zudem umfassend
eine Abdeckvorrichtung (36), welche Aussparungen für die Transportrollen (8) aufweist.

13. Fördereinheit (2) nach Anspruch 12, **dadurch gekennzeichnet, dass**
die Abdeckvorrichtung (36) als geschlossenes Profil ausgestaltet ist.

14. Fördereinheit (2) nach einem der Ansprüche 1 bis 13, **dadurch gekennzeichnet, dass**
zwei oder mehr Fördereinheiten (2) in beliebiger Anordnung zueinander anordenbar sind.

15. Fördereinheit (2) nach einem der Ansprüche 1 bis 14, **dadurch gekennzeichnet, dass**
die Steuereinheiten (20) von zwei oder mehr Fördereinheiten (2) adaptiert sind, koordiniert angesteuert zu werden.
